# EUROPEAN PATENT APPLICATION

(11) **EP 4 800 395 A1**
(43) Date of publication of application: **02.09.2026**
(21) Application number: 24882139.9
(22) Date of filing: 07.10.2024
(51) Int. Cl.: G01N 35/00, G01N 21/59, G01N 21/77

(54) **AUTOMATIC ANALYSIS DEVICE**

(30) Priority: 25.10.2023 JP 2023182904
(71) Applicant: Hitachi High-Tech Corporation, Minato-ku Tokyo 105-6409 (JP)
(72) Inventor: HORIKAWA Hiroshi, Tokyo 105-6409 (JP); FUKAYA Masashi, Tokyo 105-6409 (JP); ADACHI Sakuichiro, Tokyo 105-6409 (JP); ANDO Takahiro, Tokyo 100-8280 (JP)
(74) Representative: MERH-IP Matias Erny Reichl Hoffmann Patentanwälte PartG mbB
(86) International application number: PCT/JP2024/035795
(87) International publication number: WO 2025/089022

(57) **Abstract**

The invention provides an automatic analyzer capable of calculating a stable measurement value even when temperature fluctuations occur in a light source or a photometer. The automatic analyzer includes: a light source 104 including a first temperature measurement unit 209 and configured to irradiate light to a container 203 containing a mixed liquid of a sample and a reagent; a photometer 208 including a second temperature measurement unit 210 and configured to measure a light amount of light from the light source that has transmitted through the mixed liquid; a light amount correction value calculation unit 211 configured to calculate a light amount correction value based on a light source temperature measured by the first temperature measurement unit and a photometer temperature measured by the second temperature measurement unit; and an absorbance calculation unit 205 configured to calculate absorbance of the mixed liquid based on the light amount measured by the photometer and the light amount correction value.

## Description

### Technical Field

The present invention relates to an automatic analyzer.

### Background Art

In an automatic analyzer that analyzes a specimen such as blood, a light source is one of the important components that affect analysis performance. Light emitted from the light source is transmitted through a reaction liquid in which a reagent and the specimen are mixed, is dispersed into a specific number of wavelengths by a spectroscope, and is detected by a detector. Since a detection process as described above is provided, it is important to ensure the stability in light emission amount from the light source and the stability in light reception amount by the detector. In an optical system of the automatic analyzer, it is known that the light emission amount and the light reception amount are affected by the ambient temperature or a temperature of the light source or the detector. Therefore, a technique for stabilizing the temperature of the light source or the detector or a technique for correcting temperature fluctuation is required.

As a method of correcting a light amount related to an optical system of an automatic analyzer, PTL 1 discloses a method of correcting absorbance using an environmental temperature around a light source and a correction factor calculated before analysis.

### Citation List

### Patent Literature

PTL 1: JP2022-164188A

### Summary of Invention

### Technical Problem

In the method disclosed in PTL 1, since only the temperature on the light source side is used for correction, there is a problem that temperature fluctuation on the detector side is not reflected. For example, there is a case wherein when the temperature rises by 1°C on the light source side and the detector side, the light amount decreases on the light source side and increases on the detector side. In such a state, when performing the correction in accordance with only the temperature fluctuation on the light source side, the correction is performed in a direction of excessively increasing the light amount, and there is a concern that a correct measurement value cannot be obtained.

Further, in the method of PTL 1, correction is performed not for a light amount but for absorbance. In general, since the absorbance is calculated using the amount of incident light before transmitting through a reaction liquid and the amount of transmitted light after transmitting through the reaction liquid, it is appropriate to correct the light amount instead of the absorbance.

Further, regarding the light source and a photometer, there is an individual difference between devices. Therefore, it is desirable to have a mechanism capable of performing the light amount correction in consideration of the individual difference or capable of adjusting a changed temperature.

An object of the invention is to provide an automatic analyzer capable of calculating a stable measurement value by canceling or reducing the temperature influence of both a light source and a detector.

### Solution to Problem

An automatic analyzer according to an embodiment of the invention includes: a light source including a first temperature measurement unit, wherein the light source is configured to irradiate light to a container containing a mixed liquid of a sample and a reagent; a photometer including a second temperature measurement unit, wherein the photometer is configured to measure a light amount of light from the light source that has transmitted through the mixed liquid; a light amount correction value calculation unit configured to calculate a light amount correction value based on a light source temperature measured by the first temperature measurement unit and a photometer temperature measured by the second temperature measurement unit; and an absorbance calculation unit configured to calculate absorbance of the mixed liquid based on the light amount measured by the photometer and the light amount correction value.

### Advantageous Effects of Invention

The invention provides an automatic analyzer capable of calculating a stable measurement value even when temperature fluctuation occur in a light source or a photometer (detector). Other problems and novel features will become apparent from descriptions of the present specification and the accompanying drawings.

### Brief Description of Drawings

[FIG. 1] FIG. 1 is a schematic configuration diagram illustrating an overall configuration of an automatic analyzer.
[FIG. 2] FIG. 2 is a diagram illustrating an optical system of an automatic analyzer and devices disposed around the optical system according to Embodiment 1.
[FIG. 3] FIG. 3 is a functional block diagram illustrating a light amount correction function according to Embodiment 1.
[FIG. 4] FIG. 4 is a measurement value calculation flow according to Embodiment 1.
[FIG. 5] FIG. 5 is a graph illustrating a relationship between temperature and light amount for each wavelength.
[FIG. 6] FIG. 6 is a diagram illustrating an optical system of an automatic analyzer and devices disposed around the optical system according to Embodiment 2.
[FIG. 7] FIG. 7 is a functional block diagram illustrating a temperature adjustment function according to Embodiment 2.
[FIG. 8] FIG. 8 is a measurement value calculation flow according to Embodiment 2.
[FIG. 9] FIG. 9 is a graph illustrating a relationship between a light source temperature and a photometer adjustment temperature for each wavelength.
[FIG. 10A] FIG. 10A illustrates a hardware configuration example of a learning apparatus.
[FIG. 10B] FIG. 10B is a functional block diagram illustrating training of a learning model according to Embodiment 3.
[FIG. 11] FIG. 11 illustrates an example of a learning model.
[FIG. 12] FIG. 12 is a functional block diagram illustrating a light amount correction function according to Embodiment 3.
[FIG. 13] FIG. 13 is a functional block diagram illustrating a temperature adjustment function according to Embodiment 3.

### Description of Embodiments

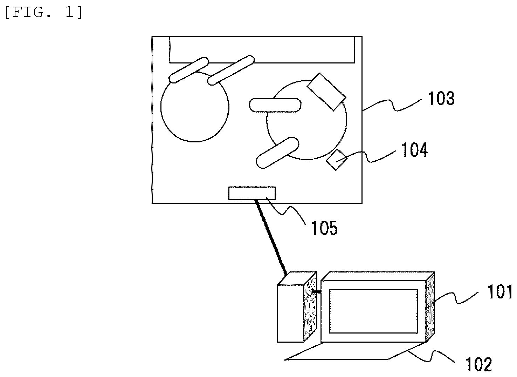

FIG. 1 is a schematic configuration diagram of an automatic analyzer. A display unit 101 displays operations performed by the automatic analyzer and measurement information. An input unit 102 inputs a request for an analysis operation to be performed by the automatic analyzer. An analysis unit 103 includes various operation mechanisms for executing the analysis operation. A light source 104 is one of elements constituting the analysis unit 103, and projects light onto a measurement target. A control unit 105 controls various operation mechanisms constituting the analysis unit 103 based on an operation instruction input from the input unit 102 or the like, and further calculates measurement data.

### Embodiment 1

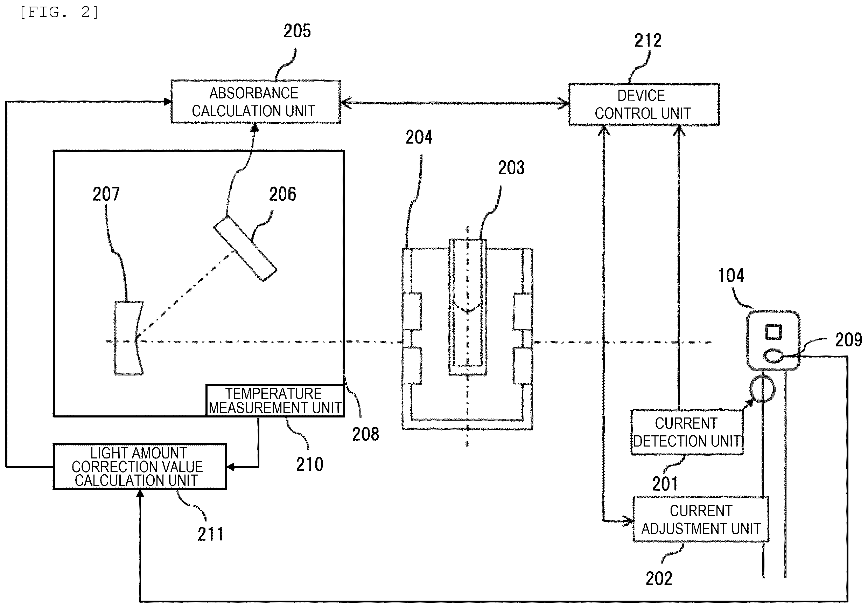

With reference to FIG. 2, an optical system used in the automatic analyzer according to Embodiment 1 and devices disposed around the optical system will be described. The light source 104 includes an LED element. The number of LED elements constituting the light source 104 is not limited, and a plurality of LED elements may be used. When the light source 104 includes a plurality of LED elements, the amount of current supplied to each LED element is individually set. During the operation of the analysis unit 103, the light from the light source 104 is applied to a reaction container 203 transmitted through a photometric position between the light source 104 and a diffraction grating 207. In a mixed liquid in the reaction container 203, a measurement item component of a test sample reacts with a reagent, and a photometric target substance is produced or consumed in proportion to the concentration of the measurement item component. There is reaction tank water (constant temperature medium) between a reaction tank 204 and the reaction container 203.

Of the light applied to the mixed liquid, light having a wavelength in an absorption region corresponding to the photometric target substance is absorbed by the photometric target substance. The light transmitted through the mixed liquid enters the concave diffraction grating 207 provided in a photometer 208. The diffraction grating 207 disperses the incident light by wavelength and outputs the dispersed light to a photodetector 206. The photodetector 206 converts a light amount into an electrical signal and outputs the electrical signal to an absorbance calculation unit 205. The absorbance calculation unit 205 calculates absorbance and outputs the absorbance to a device control unit 212. As will be described later, the absorbance calculation unit 205 calculates the absorbance based on a light amount correction value that is calculated by a light amount correction value calculation unit 211 based on the electrical signal output from the photodetector 206 and temperature data acquired by temperature measurement units 209 and 210.

The device control unit 212 performs colorimetric analysis based on the absorbance output from the absorbance calculation unit 205. When performing the colorimetric analysis, cell blank water is dispensed into all reaction cells, and the absorbance at each wavelength of 340 nm to 800 nm is measured (cell blank measurement). The device control unit 212 holds (stores) a measurement result as a cell blank value (also referred to as a baseline light amount). The device control unit 212 compares the cell blank value with the absorbance of the mixed liquid to be analyzed to correct the absorbance, and outputs the corrected absorbance as measurement data to a user interface (such as a screen displayed on the display unit 101).

A current detection unit 201 monitors (measures) a current flowing through the light source 104. A current adjustment unit 202 includes a circuit that reduces the amount of current supplied to the light source 104 or turns off the power of the light source 104 at a timing that does not affect the analysis.

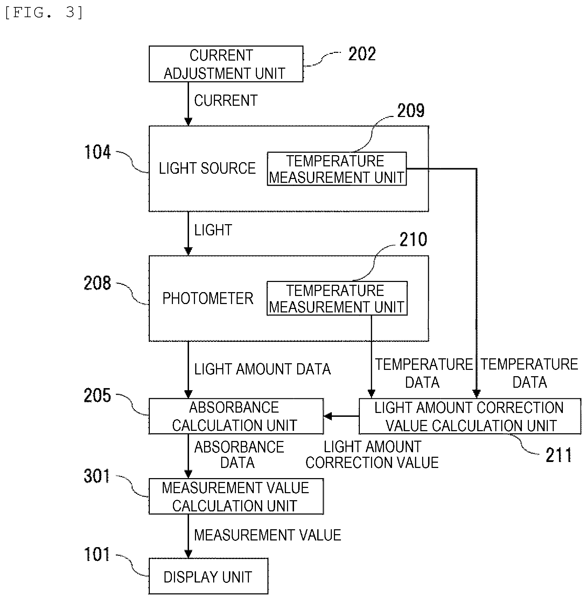

The hardware of the control unit 105 illustrated in FIG. 1 is a computer, and functions as a functional unit that provides a predetermined function by executing a program. The device control unit 212, the light amount correction value calculation unit 211, and the absorbance calculation unit 205 illustrated in FIG. 2 and a measurement value calculation unit 301 illustrated in FIG. 3 are all examples of functional units. Hereinafter, a subject as hardware of these functional units is a computer (control unit 105). The computer executes processing according to a program loaded into a memory by the processor while appropriately using resources such as the memory and a communication interface. Processing for implementing a function is not limited to software program processing, and can be implemented by a dedicated circuit. The dedicated circuit may be a field programmable gate array (FPGA) or an application specific integrated circuit (ASIC), or the like.

The light amount correction function of Embodiment 1 will be described with reference to FIG. 3. The light source 104 is supplied with a current from the current adjustment unit 202 to emit light. The light emitted from the light source 104 is measured as a light amount in the photometer 208, and light amount data is transmitted to the absorbance calculation unit 205. The light source 104 includes the temperature measurement unit 209 that measures a light source temperature, and the photometer 208 includes the temperature measurement unit 210 that measures a photometer temperature. Temperature data measured by the temperature measurement units 209 and 210 is transmitted to the light amount correction value calculation unit 211. The light amount correction value calculation unit 211 calculates a light amount correction value in accordance with a light amount correction factor, which is calculated and held in advance, and the temperature data transmitted from the temperature measurement units 209 and 210. As described above, by using temperature information on the light source 104 and temperature information on the photometer 208, it is possible to obtain information on the light amount for which both the influence from temperature fluctuation of the light source side and the influence from temperature fluctuation of the detector side are excluded.

The calculated light amount correction value is transmitted to the absorbance calculation unit 205. The absorbance calculation unit 205 calculates the absorbance from the light amount data and the light amount correction value. The calculated absorbance is transmitted to the measurement value calculation unit 301. The measurement value calculation unit 301 calculates a measurement value set for each measurement item from the received absorbance data. The calculated measurement value is displayed to a user on the display unit 101.

Here, the light amount correction value calculation unit 211 calculates the light amount correction value based on the temperature data transmitted from the temperature measurement units 209 and 210 and the light amount correction factor. The light amount correction value calculation unit 211 may hold a light amount correction factor for light source temperature correction and a light amount correction factor for photometer temperature correction. The light amount correction factor for light source temperature correction can be obtained by measuring the light amount from the light source with a photometer having a constant photometer temperature while changing an environmental temperature of the light source. In addition, the light amount correction factor for photometer temperature correction can be obtained by measuring the light amount from the light source having a constant light source temperature with the photometer while changing a photometer temperature. In this case, the light amount correction value is obtained as a sum of the light amount correction value based on the light source temperature change of the light source 104 and the light amount correction value based on the photometer temperature change of the photometer 208.

The light amount correction factor may be a value unique to each device. Therefore, it is preferable that the light amount correction factor can be calculated on an actual device. In particular, when an LED light source is used as the light source 104, since the LED light source is a consumable, it is preferable that the device itself can calculate the light amount correction factor for light source temperature correction for the LED light source. For example, when the device is activated from a power-off state, the light amount correction factor for light source temperature correction can be calculated based on a light amount change from when the light source 104 is turned on until the light amount is stabilized and the temperature data measured by the temperature measurement unit 209 for the period.

As described above, by using the method of calculating the light amount correction value illustrated in FIG. 3, it is possible to calculate the light amount correction value corresponding to the temperature fluctuation at two points of the light source and the photometer. When the light amount correction factor is a value unique to the device, the light amount correction value reflecting the individual difference of each device can be calculated.

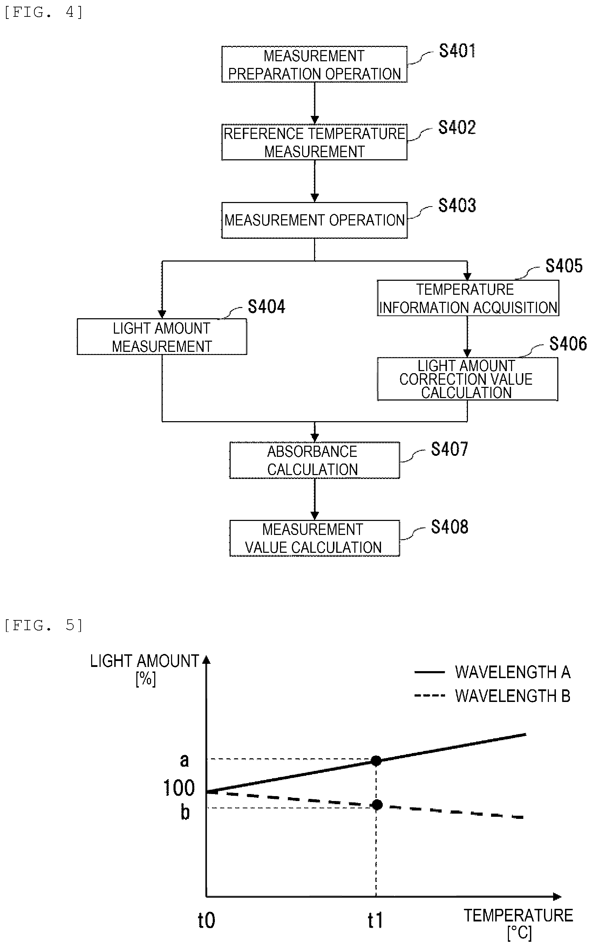

Next, a measurement value calculation flow of Embodiment 1 will be described with reference to FIG. 4. This flow is executed by the control unit 105. When the measurement of the automatic analyzer is started, first, measurement preparation operation S401 is started. Reference temperature measurement S402 is performed during the measurement preparation operation S401. In the reference temperature measurement S402, temperature measurement values at that time measured by the temperature measurement units 209 and 210 are stored. Subsequently, the flow proceeds to measurement operation S403. The temperature measurement units 209 and 210 perform temperature information acquisition S405 in parallel with light amount measurement S404 during the measurement operation S403, and light amount correction value calculation S406 is performed using the acquired temperature data. In the light amount correction value calculation S406, a difference between the reference temperature measured in the reference temperature measurement S402 and the temperature at the time of light amount measurement acquired in the temperature information acquisition S405 is calculated, and the light amount correction value is calculated using the difference and the light amount correction factor. Absorbance calculation S407 is executed using light amount data measured in the light amount measurement S404 and the light amount correction value calculated in the light amount correction value calculation S406. Thereafter, in measurement value calculation S408, a measurement value is calculated using absorbance data calculated in the absorbance calculation S407.

FIG. 5 is a graph illustrating a relationship between temperature and light amount for each wavelength. A horizontal axis represents the temperature, a vertical axis represents the light amount, a light amount change with respect to a temperature change for a wavelength A is indicated by a solid line, and a light amount change with respect to a temperature change for a wavelength B is indicated by a broken line. An inclination in this graph corresponds to the light amount correction factor. It is assumed that the light amount at a reference temperature t0 is 100%, and at an arbitrary temperature t1, the light amount at the wavelength A is a% and the light amount at the wavelength B is b%. FIG. 5 illustrates an example in which b < 100 < a. As described above, temperature dependence of the light amount generally differs for each wavelength of light. The difference in temperature dependence depending on the wavelength is the same for the light source temperature and the photometer temperature. Therefore, the light amount correction value calculation unit 211 desirably holds the light amount correction factor for light source temperature correction and the light amount correction factor for photometer temperature correction for each wavelength used for measurement.

For example, the light amount correction factor is obtained for each wavelength, a temperature before cell blank water measurement is set as the reference temperature t0, the light amount at the start of the cell blank water measurement is set as 100%, and the baseline light amount used for the absorbance calculation is corrected according to temperature fluctuation from the reference temperature t0. For example, in a case where the light amount has a light amount correction factor of +1%/1°C at a certain wavelength and the temperature rises by +0.1°C from the reference temperature t0, the baseline light amount after correction is 100.1%. By using the light amount correction factor for each wavelength in this manner, it is possible to perform appropriate light amount correction for fluctuation from the reference temperature for each wavelength.

### Embodiment 2

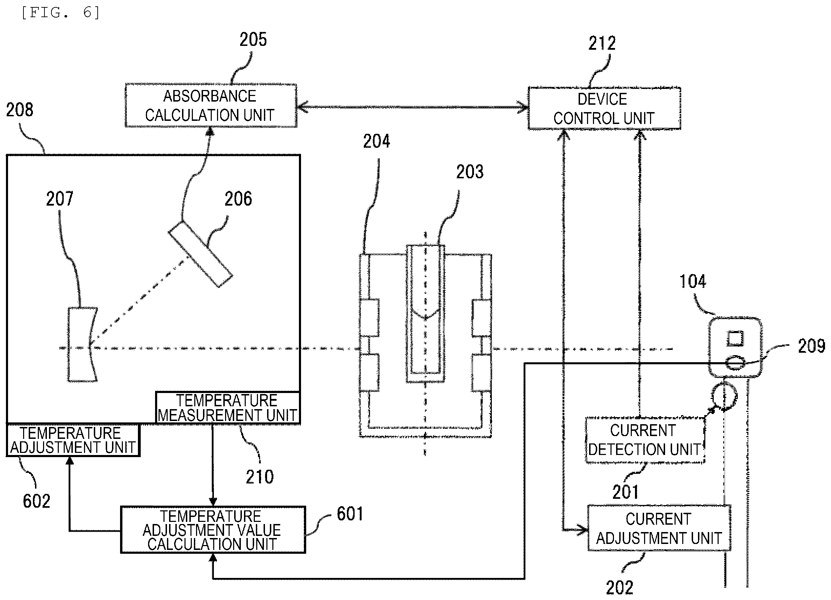

With reference to FIG. 6, an optical system used in an automatic analyzer according to Embodiment 2 and devices disposed around the optical system will be described. The same components as those in Embodiment 1 are denoted by the same reference signs, a redundant description thereof will be omitted, and differences from Embodiment 1 will be mainly described.

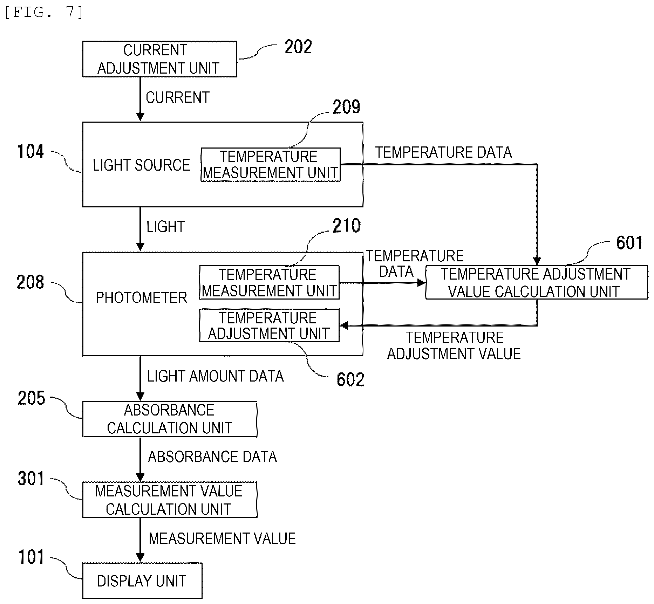

The photometer 208 includes a temperature adjustment unit 602 that adjusts an environmental temperature thereof. Temperature data measured by the temperature measurement units 209 and 210 is transmitted to a temperature adjustment value calculation unit 601. The temperature adjustment value calculation unit 601 calculates a temperature adjustment value from the transmitted temperature data, and adjusts an output of the temperature adjustment unit 602 installed in the photometer 208 with the value. The device control unit 212, the temperature adjustment value calculation unit 601, and the absorbance calculation unit 205 illustrated in FIG. 6, and the measurement value calculation unit 301 illustrated in FIG. 7 are all functional units, and a subject as hardware is a computer (control unit 105).

The temperature adjustment function of Embodiment 2 will be described with reference to FIG. 7. Temperature data measured by the temperature measurement units 209 and 210 is transmitted to the temperature adjustment value calculation unit 601. The temperature adjustment value calculation unit 601 calculates a temperature adjustment value in accordance with a temperature adjustment rate calculated and held in advance, and differences between a light source temperature and a photometer temperature transmitted from the temperature measurement units 209 and 210 and respective reference temperatures. The calculated temperature adjustment value is transmitted to the temperature adjustment unit 602. The temperature adjustment unit 602 changes the output according to the transmitted temperature adjustment value to adjust the temperature of the photometer 208. Light emitted from the light source 104 is measured as a light amount in the photometer 208, and light amount data is transmitted to the absorbance calculation unit 205 to calculate absorbance. The calculated absorbance is transmitted to the measurement value calculation unit 301. The measurement value calculation unit 301 calculates a measurement value set for each measurement item from received absorbance data.

Here, the temperature adjustment rate is set so as to cancel out, by adjusting the temperature of the photometer 208, a light amount change associated with temperature fluctuations occurring in the light source 104. The temperature adjustment rate may be a value unique to each device. As described in Embodiment 1, the light source correction factor for light source temperature correction can be calculated on the actual device, and the temperature dependence of the light amount associated with the temperature change of the light source can be obtained. On the other hand, the temperature dependence of the light amount associated with the temperature change of the photometer that is not a consumable is given to the device in advance, and the temperature dependence of the light amount associated with the temperature change of the photometer is known. If there is information on the two types of temperature dependency, the temperature adjustment rate of the photometer 208 can be obtained for each device so as to cancel out the light amount change associated with the temperature fluctuations occurring in the light source 104.

As described above, by using the method of calculating the temperature adjustment value illustrated in FIG. 7, it is possible to cancel out or reduce light amount fluctuation, which is caused by the temperature fluctuation on the light source side, by the light amount change caused by the temperature change on the photometer side.

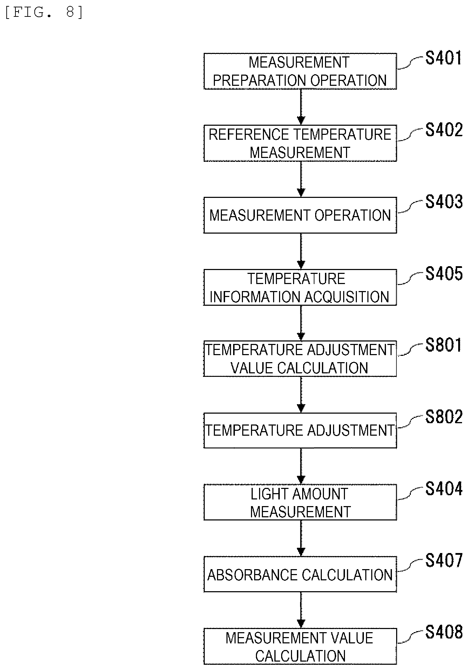

Next, a measurement value calculation flow of Embodiment 2 will be described with reference to FIG. 8. This flow is executed by the control unit 105. The same steps as those in FIG. 3 are denoted by the same reference signs, and a redundant description will be omitted. The temperature information acquisition S405 is performed during the measurement operation S403, and temperature adjustment value calculation S801 is performed using the acquired temperature data. Temperature adjustment S802 for the photometer is executed using the temperature adjustment value calculated in the temperature adjustment value calculation S801.

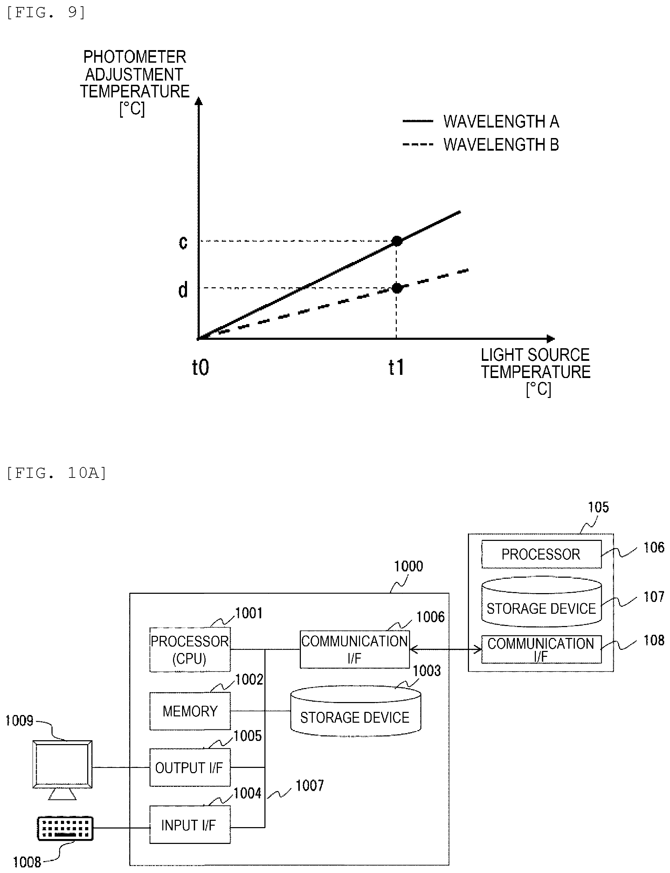

FIG. 9 is a graph illustrating a relationship between a light source temperature and a photometer adjustment temperature for each wavelength. The photometer adjustment temperature is an adjustment amount of the photometer temperature for canceling out a light amount change due to a change in the light source temperature. A horizontal axis indicates the light source temperature, a vertical axis indicates the photometer adjustment temperature, a relationship of the photometer adjustment temperature with respect to the light source temperature for a wavelength A is indicated by a solid line, and a relationship of the photometer adjustment temperature with respect to the light source temperature for a wavelength B is indicated by a broken line. It is assumed that the photometer adjustment temperature at a reference temperature t0 is 0°C, and at an arbitrary temperature t1, the photometer adjustment temperature at the wavelength A is c°C, and the photometer adjustment temperature at the wavelength B is d°C. As described above, a temperature adjustment rate generally differs for each wavelength of light.

Therefore, it is desirable to set a temperature adjustment rate according to the wavelength of light and select the temperature adjustment rate of any wavelength. For example, the temperature adjustment rate for the wavelength that is most affected by the light amount change associated with the temperature fluctuation is selected. For example, in a case where the temperature adjustment rate is +5°C/1°C and the temperature rises by +0.01°C at the selected wavelength, the adjustment temperature value is calculated to be 0.05°C, and the output of the temperature adjustment unit 602 is adjusted in order to cause temperature fluctuation corresponding to the value in the photometer. In this way, control is performed so that the light amount change due to the temperature fluctuation on the light source side is canceled out by the temperature fluctuation caused on the photometer side.

In principle, it is also possible to provide the light source with a temperature adjustment unit and cancel out a light amount change due to temperature fluctuation on the photometer side by temperature fluctuations occurring on the light source side, but since the light source is a replacement component, the installation of the temperature adjustment unit increases the operation cost. In the configuration of Embodiment 2, an increase in operation cost is avoided by providing the temperature adjustment unit 602 to the photometer 208 that is not a replacement component. In addition, the light amount fluctuation with respect to the temperature fluctuation on the photometer side is smaller than that on the light source side, and thus it is possible to eliminate the need for more precise control than control on the light source side.

### Embodiment 3

In Embodiment 3, a trained machine learning model is applied. Specifically, the light amount correction value calculated by the light amount correction value calculation unit 211 according to Embodiment 1 or the temperature adjustment value calculated by the temperature adjustment value calculation unit 601 according to Embodiment 2 can be corrected using the trained machine learning model. Although it is assumed that the light amount correction value calculation unit 211 and the temperature adjustment value calculation unit 601 calculate the light amount correction value and the temperature adjustment value based on a model having the light source temperature and the photometer temperature as variables, the effect of canceling the influence of temperature change on the light amount correction value and the temperature adjustment value may be insufficient due to the influence of variations caused by individual differences of the light source and the photometer, the device structure, and the like. Therefore, a trained learning model capable of correcting the light amount correction value and the temperature adjustment value using additional explanatory variables is used.

Hereinafter, a learning model used for calculating the light amount correction value according to Embodiment 1 will be described as an example. FIG. 10A illustrates a hardware configuration example of a learning apparatus 1000 that performs training of a learning model. The learning apparatus 1000 is capable of transmitting and receiving data to and from the control unit 105.

The learning apparatus 1000 is implemented by an information processing apparatus including a processor (CPU) 1001, a memory 1002, a storage device 1003, an input interface (I/F) 1004, an output I/F 1005, a communication I/F 1006, and a bus 1007 as main components. The processor 1001 functions as a functional unit (functional block) that provides a predetermined function by executing processing according to a program loaded in the memory 1002. The storage device 1003 stores data and a program used by the functional unit. As the storage device 1003, for example, a non-volatile storage medium such as a hard disk drive (HDD) or a solid state drive (SSD) is used. The input I/F 1004 is an interface for connecting an input device 1008 such as a keyboard and a pointing device, and the output I/F 1005 is an interface for connecting a display device 1009. The communication I/F 1006 enables communication with the control unit 105 and other information processing apparatuses. These components are communicably connected to one another via the bus 1007.

All or some of the functions implemented by software may be implemented by hardware such as an FPGA or an ASIC. All or some of the functions may be implemented by a plurality of information processing apparatuses, or may be implemented as an application on a cloud. In FIG. 10A, a processor 106, a storage device 107, and a communication I/F 108 of the control unit 105 having the same hardware configuration as the learning apparatus 1000 are extracted and illustrated.

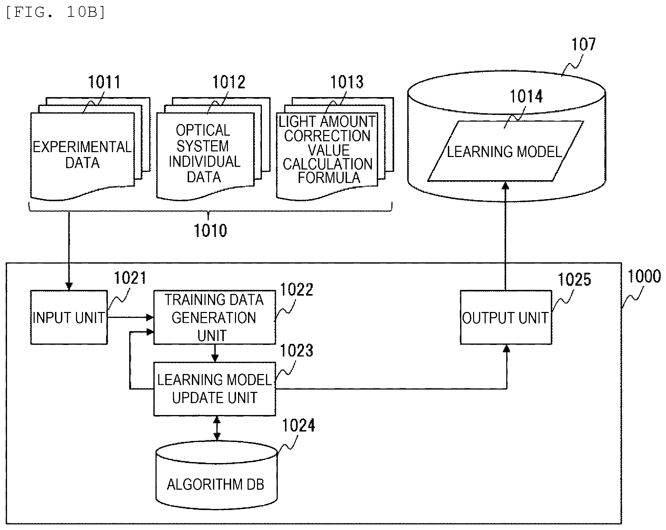

FIG. 10B is a functional block diagram for training the learning model of Embodiment 3. The storage device 107 of the control unit 105 stores a learning model 1014 trained by the learning apparatus 1000. Training data 1010 for generating training data is input to the learning apparatus 1000.

The training data 1010 includes, for example, experimental data 1011 collected by repeating measurement for a plurality of samples having a predetermined relationship in absorbance using an apparatus before shipment, optical system individual data 1012 for an optical system of the apparatus used in the experiment, and a light amount correction value calculation formula 1013 used for light amount correction. The experimental data 1011 collected at this time includes temperature data from the temperature measurement units 209 and 210, light amount data from the photometer 208, room temperature data, and the like. The optical system individual data 1012 includes a measured wavelength, a photometer wavelength adjustment value, an initial light amount, a light source usage time, and the like. The measured wavelength is a wavelength measured by the photometer 208, the photometer wavelength adjustment value is an adjustment value for correcting a variation in the wavelength measured by the photometer 208, the initial light amount is the light amount when the use of the light source 104 is started, and the usage time is the cumulative lighting time of the light source 104. The light amount correction value calculation formula 1013 is a correction formula for the light amount correction value calculation unit 211 to calculate a light amount correction value.

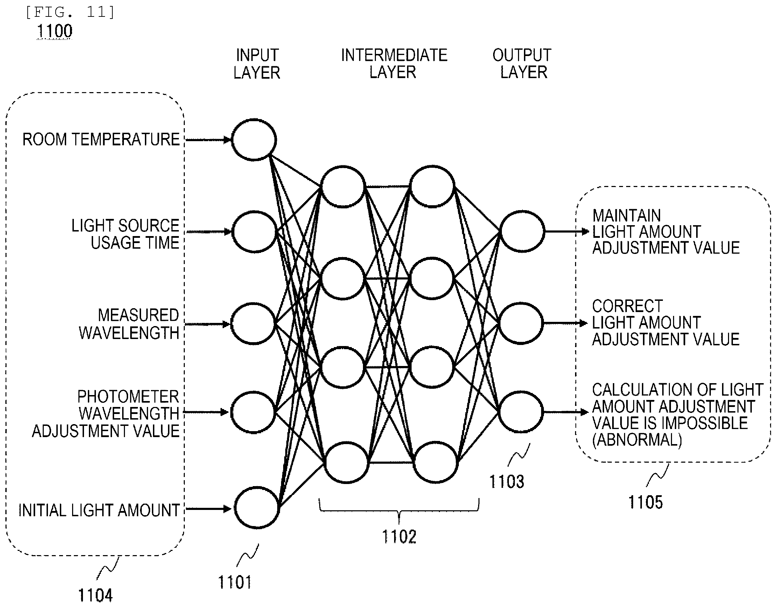

FIG. 11 is a diagram illustrating an example of a learning model 1100 using a neural network. The learning model 1100 includes an input layer 1101, an intermediate layer 1102, and an output layer 1103. An explanatory variable input to the input layer 1101 is propagated to the intermediate layer 1102 and further propagated to the output layer 1103 in order. An inference result (objective variable) based on the explanatory variable input to the input layer 1101 is output from the output layer 1103. In general, the intermediate layer of the neural network includes a large number of layers, and is simplified here. The input layer 1101, the intermediate layer 1102, and the output layer 1103 include a plurality of input units, intermediate units, and output units indicated by circles, respectively. Input data (explanatory variable) input to each input unit of the input layer 1101 is weighted by a coupling coefficient between the input unit and the intermediate unit, and is input to each intermediate unit. A value of the intermediate unit of the intermediate layer 1102 is calculated by adding a value from the input unit. An output from each intermediate unit of the intermediate layer 1102 is weighted by a coupling coefficient between the intermediate unit and the output unit, and is input to each output unit. A value of the output unit of the output layer 1103 is calculated by adding the value from the intermediate unit. As described above, the processing in the intermediate layer 1102 corresponds to nonlinearly converting a value of the input data input to the input layer 1101 and outputting as output data of the output layer 1103.

For example, input data 1104 serving as an explanatory variable is data acquired as the training data 1010. Output data 1105 serving as an objective variable includes three labels of "maintain light amount adjustment value", "correct light amount adjustment value", and "calculation of light amount adjustment value is impossible (abnormal)".

A training data generation unit 1022 illustrated in FIG. 10B generates, from the training data 1010, training data that is a combination of the input data 1104 of the learning model 1100 and a label serving as a correct answer thereof. The input data 1104 serving as training data extracts values of parameters serving as the input data 1104 from the training data 1010. The correct answer label is calculated from the training data 1010. For example, the light amount assumed for each sample and the light amount calculated using the light amount correction value calculation formula 1013 are compared. When the two light amounts are considered to be substantially equivalent, "maintain light amount adjustment value" is set, when the two amounts are not equivalent but a difference thereof is within a predetermined value, "correct light amount adjustment value" is set, and when the difference exceeds the predetermined value, "calculation of light amount adjustment value is impossible (abnormal)" is set. Further, in the case of "correct light amount adjustment value", it is desirable to perform training according to a correction amount of the light amount adjustment value.

A learning model update unit 1023 trains the learning model 1100 using the training data generated by the training data generation unit 1022. The trained learning model 1014 is transmitted from an output unit 1025 to the control unit 105, stored in the storage device 107, and used to determine and correct the light amount correction value. It is assumed that an original form of the learning model 1100 is accumulated in an algorithm database 1024. Here, although an example of the learning model using a neural network is shown, the invention is not limited thereto.

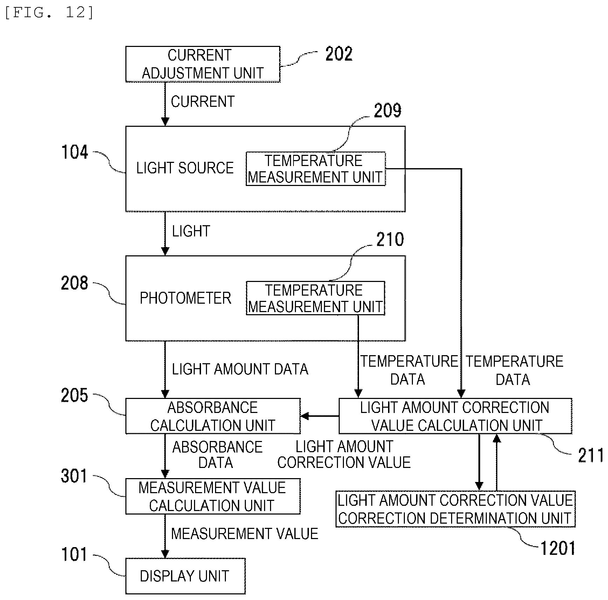

The light amount correction function of Embodiment 3 will be described with reference to FIG. 12. A difference from FIG. 3 (Embodiment 1) is a light amount correction value correction determination unit 1201, which is a functional unit that determines correction necessity of the light amount correction value by using the trained learning model 1014. The light amount correction value correction determination unit 1201 determines, using the trained learning model 1014, the correction necessity of the light amount correction value calculated by the light amount correction value calculation unit 211, and outputs a determination result to the light amount correction value calculation unit 211. When the determination result is "maintain light amount adjustment value", the light amount correction value calculation unit 211 outputs the calculated light amount correction value to the absorbance calculation unit 205. When the determination result is "correct light amount adjustment value", the light amount correction value calculation unit 211 corrects the calculated light amount correction value based on the correction amount output together by the trained learning model 1014, and outputs the corrected light amount correction value to the absorbance calculation unit 205. When the determination result is "calculation of light amount adjustment value is impossible (abnormal)", the light amount correction value calculation unit 211 stops subsequent processing and requests the device control unit 212 to report an alarm.

As described above, the example in which the correction necessity of the light amount correction value is determined using the trained learning model 1014 has been described in Embodiment 3. Similarly, it is also possible to determine correction necessity of the temperature correction value of Embodiment 2. A trained learning model for determining correction necessity of the temperature adjustment value can also be generated by the same method as described above. Experimental data, optical system individual data regarding an optical system related to a device that acquires the experimental data, and a temperature adjustment value calculation formula used by the temperature adjustment value calculation unit 601 to calculate the temperature adjustment value are used as the training data.

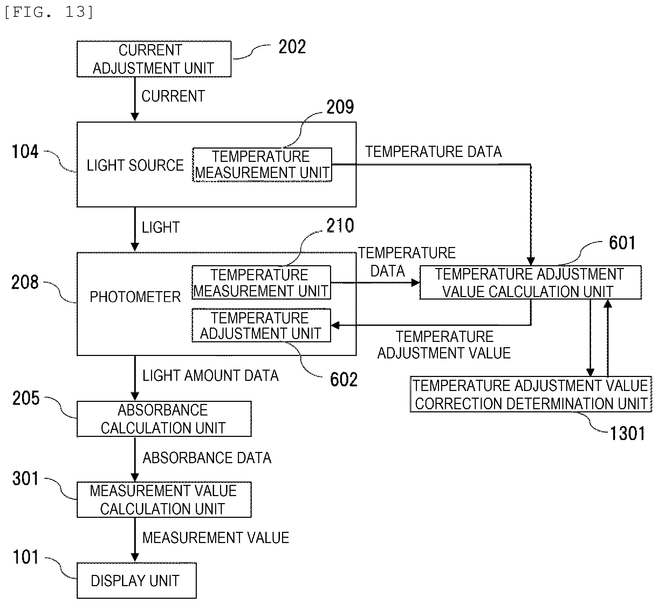

The temperature adjustment function of Embodiment 3 will be described with reference to FIG. 13. A difference from FIG. 7 (Embodiment 2) is a temperature adjustment value correction determination unit 1301, which is a functional unit that determines correction necessity of the temperature adjustment value using a trained learning model. The temperature adjustment value correction determination unit 1301 determines, using the trained learning model, the correction necessity of the temperature adjustment value calculated by the temperature adjustment value calculation unit 601, and outputs a determination result to the temperature adjustment value calculation unit 601. When the determination result is "maintain temperature adjustment value", the temperature adjustment value calculation unit 601 outputs the calculated temperature adjustment value to the temperature adjustment unit 602. When the determination result is "correct temperature adjustment value", the temperature adjustment value calculation unit 601 corrects the calculated temperature adjustment value based on a correction amount output together by the trained learning model, and then outputs the corrected temperature adjustment value to the temperature adjustment unit 602. When the determination result is "calculation of temperature adjustment value is impossible (abnormal)", the temperature adjustment value calculation unit 601 stops subsequent processing and requests the device control unit 212 to report an alarm.

The invention is not limited to the above embodiments, and includes various modifications. For example, the embodiments described above have been described in detail to facilitate understanding of the invention, and the invention is not necessarily limited to those including all configurations described above. A part of a configuration in one embodiment can be replaced with a configuration in another embodiment, and a configuration in one embodiment can also be added to a configuration in another embodiment. A part of a configuration in each embodiment may be added to, deleted from, or replaced with another configuration.

### Reference Signs List

- 101:: display unit
- 102:: input unit
- 103:: analysis unit
- 104:: light source
- 105:: control unit
- 106:: processor
- 107:: storage device
- 108:: communication interface
- 201:: current detection unit
- 202:: current adjustment unit
- 203:: reaction container
- 204:: reaction tank
- 205:: absorbance calculation unit
- 206:: photodetector
- 207:: diffraction grating
- 208:: photometer
- 209:: temperature measurement unit
- 210:: temperature measurement unit
- 211:: light amount correction value calculation unit
- 212:: device control unit
- 301:: measurement value calculation unit
- 601:: temperature adjustment value calculation unit
- 602:: temperature adjustment unit
- 1000:: learning apparatus
- 1001:: processor (CPU)
- 1002:: memory
- 1003:: storage device
- 1004:: input interface
- 1005:: output interface
- 1006:: communication interface
- 1008:: input device
- 1009:: display device
- 1010:: training data
- 1011:: experimental data
- 1012:: optical system individual data
- 1013:: light amount correction value calculation formula
- 1014:: learning model
- 1021:: input unit
- 1022:: training data generation unit
- 1023:: learning model update unit
- 1024:: algorithm database
- 1025:: output unit
- 1100:: learning model
- 1101:: input layer
- 1102:: intermediate layer
- 1103:: output layer
- 1104:: input data
- 1105:: output data
- 1201:: light amount correction value correction determination unit
- 1301:: temperature adjustment value correction determination unit

## Claims

1. An automatic analyzer comprising:
a light source comprising a first temperature measurement unit, wherein the light source is configured to irradiate light to a container containing a mixed liquid of a sample and a reagent;
a photometer comprising a second temperature measurement unit, wherein the photometer is configured to measure a light amount of light from the light source that has transmitted through the mixed liquid;
a light amount correction value calculation unit configured to calculate a light amount correction value based on a light source temperature measured by the first temperature measurement unit and a photometer temperature measured by the second temperature measurement unit; and
an absorbance calculation unit configured to calculate an absorbance of the mixed liquid based on the light amount measured by the photometer and the light amount correction value.

2. The automatic analyzer according to claim 1, wherein
the light amount correction value calculation unit
is configured to hold a first light amount change rate that is a light amount change with respect to a change in the light source temperature and a second light amount change rate that is a light amount change with respect to a change in the photometer temperature, and
calculates the light amount correction value as a sum of: a light amount correction value based on the change in the light source temperature, the light amount correction value based on the change in the light source temperature being based on a difference between the light source temperature measured by the first temperature measurement unit and a reference temperature and the first light amount change rate; and a light amount correction value based on the change in the photometer temperature, the light amount correction value based on the change in the photometer temperature change being based on a difference between the photometer temperature measured by the second temperature measurement unit and a reference temperature and the second light amount change rate.

3. The automatic analyzer according to claim 2, wherein
the photometer includes a diffraction grating configured to disperse incident light by wavelength and a photodetector configured to detect dispersed light, and
the light amount correction value calculation unit is configured to hold the first light amount change rate and the second light amount change rate for each wavelength.

4. The automatic analyzer according to claim 1, further comprising:
a light amount correction value correction determination unit configured to evaluate and correct, using a trained learning model, the light amount correction value calculated by the light amount correction value calculation unit, wherein
the learning model is a learning model trained using training data generated based on at least experimental data, optical system individual data regarding an optical system including the light source and the photometer related to a device that acquires the experimental data, and a light amount correction value calculation formula used by the light amount correction value calculation unit to calculate the light amount correction value.

5. An automatic analyzer comprising:
a light source comprising a first temperature measurement unit, wherein the light source is configured to irradiate light to a container containing a mixed liquid of a sample and a reagent;
a photometer comprising a second temperature measurement unit, wherein the photometer is configured to measure a light amount of light from the light source that has transmitted through the mixed liquid;
a temperature adjustment value calculation unit configured to calculate a temperature adjustment value based on a light source temperature measured by the first temperature measurement unit and a photometer temperature measured by the second temperature measurement unit;
a temperature adjustment unit configured to adjust the photometer temperature based on the temperature adjustment value; and
an absorbance calculation unit configured to calculate absorbance of the mixed liquid based on the light amount measured by the photometer.

6. The automatic analyzer according to claim 5, wherein
the temperature adjustment value calculation unit
is configured to hold a temperature adjustment rate that is set such that a light amount change with respect to a change in the light source temperature is canceled out by a temperature change of the photometer, and
calculates the temperature adjustment value based on a difference between the light source temperature measured by the first temperature measurement unit and a reference temperature, a difference between the photometer temperature measured by the second temperature measurement unit and the reference temperature, and the temperature adjustment rate.

7. The automatic analyzer according to claim 6, wherein
the photometer includes a diffraction grating configured to disperse incident light by wavelength and a photodetector configured to detect the dispersed light, and
the temperature adjustment value calculation unit is configured to hold the temperature adjustment rate for each wavelength.

8. The automatic analyzer according to claim 5, further comprising:
a temperature adjustment value correction determination unit configured to evaluate and correct, using a trained learning model, the temperature adjustment value calculated by the temperature adjustment value calculation unit, wherein
the learning model is a learning model trained using training data generated based on experimental data, optical system individual data regarding an optical system including the light source and the photometer related to a device that acquires the experimental data, and a temperature adjustment value calculation formula used by the temperature adjustment value calculation unit to calculate the temperature adjustment value.
